# EUROPÄISCHE PATENTSCHRIFT

(11) **EP 1 389 691 B1**
(45) Veröffentlichungstag und Bekanntmachung des Hinweises auf die Patenterteilung: **09.02.2005**
(21) Anmeldenummer: 03017516.0
(22) Anmeldetag: 05.08.2003
(51) Int. Cl.: F16B 37/04, F16B 33/00

(54) **Kunststoffmutter zur Anbringung an einem Bauteil**
Plastic nut for mounting at a construction unit
Ecrou en plastique pour monter à un élément de construction

(30) Priorität: 05.08.2002 DE 10235799
(43) Veröffentlichungstag der Anmeldung: 18.02.2004
(73) Patentinhaber: EJOT GmbH & Co. KG, 57334 Bad Laasphe (DE)
(72) Erfinder: Behle, Jürgen, 57334 Bad Laasphe (DE); Koenig, Gottfried, Dr., 57334 Bad Laasphe (DE); Welik, Günter, 57334 Bad Laasphe (DE)
(74) Vertreter: Bardehle, Heinz, Dipl.-Ing.

(56) Entgegenhaltungen:
- EP-A- 1 143 157
- US-A- 3 489 312
- US-A- 5 636 953

## Beschreibung

Die Erfindung bezieht sich auf eine Kunststoffmutter zur Anbringung an einem einen Durchbruch aufweisenden Bauteil, die mit einem zur Aufnahme einer Schraube dienenden Mutterstück in den Durchbruch einsteckbar ist und zur Anlage an der einen Seite des Bauteils mit einem ein Durchgangsloch für die Schraube aufweisenden Flansch, der auf seiner dem Bauteil zugewandten Seite eine Dichtungsscheibe aufweist, und zur Anlage an der anderen Seite des Bauteils mit Schnapphaken versehen ist, die nach erfolgtem Einführen beim Anziehen der Schraube im Aufnahmeloch der Kunststoffmutter ausspreizen und damit die Kunststoffmutter am Bauteil sichern.

In der US-PS 5,636,953 (siehe insbesondere Fig. 9) ist eine in ein Loch eines Bauteils einsetzbare Kunststoffmutter dargestellt, bei der ein Dichtungsmaterial zwischen dem Bauteil und einem Flansch der Kunststoffinutter vorgesehen ist, das durch Erhitzung aufgeschmolzen wird und dabei den Bereich zwischen dem Bauteil und dem Flansch ausfüllt und den Flanschrand seitlich umschließt. Eine Abdeckung des Flansches an dessen dem Dichtungsmaterial abgewandter Seite ist dabei nicht vorgesehen.

Es ist weiterhin eine Kunststoffmutter in der EP 1 143 157 A1 dargestellt und beschrieben, die zum Einsetzen in ein Rechteckloch einer Platte dient, das dem oben erwähnten Bauteil entspricht. Sie besitzt einen Flansch, der sich auf der einen Seite der Platte gegen diese anlegt, und ein Mutterstück, das durch das Rechteckloch hindurchgeführt wird. An dem Mutterstück sind über jeweils eine Biegezone zwei Schnapphaken angesetzt, die schräg aufwärts in Richtung zum Flansch gerichtet sind und beim Einführen in das Rechteckloch zusammengedrückt werden, bis sie nach vollständigem Einsetzen in das Rechteckloch nach außen aufspreizen und damit die Kunststoffmutter an der Platte sichern. Die Kunststoffmutter dient insbesondere zum Anbringen eines weiteren Bauelements an dem Bauteil, wozu in das Rechteckloch die Kunststoffmutter eingesteckt und das anzubringende Bauelement mittels einer in die Kunststoffmutter eingeführten Schraube angeschraubt wird. Dabei sorgt eine auf der Innenseite des Flansches angebrachte, flache Dichtungsscheibe aus Gummi für eine gewisse Abdichtung im Bereich des Flansches. Der Gedanke der Verwendung einer flachen Dichtungsscheibe bei einem in eine Platte einsetzbaren Mutterstück, und zwar zwischen einem Flansch dieses Mutterstücks und der Platte, wird auch in der EP 358 896 B1 vorgeschlagen. Eine sichere Abdichtung des Bereichs auf der einen Seite des Bauteils gegenüber der anderen Seite des Bauteils lässt sich mit den bekannten Abdichtungen jedoch nicht erzielen, da insbesondere im Bereich der Schraube Undichtigkeiten entstehen können.

Der Erfindung liegt die Aufgabe zugrunde, die Kunststoffmutter so zu gestalten, dass mit ihr eine sichere Abdichtung, insbesondere auch im Bereich des Durchbruchs, in dem die Kunststoffmutter eingesteckt ist, erzielt wird, was gerade im Automobilbau zwecks Verhinderung des Eindringens von Wasser in den inneren Bereich der Karosserie von besonderer Bedeutung ist. Erfindungsgemäß geschieht dies dadurch, dass die Dichtungsscheibe den Flansch ganz als Überzug mit einem an ihrem Außenrand den Flansch umfassenden Bund und von ihrem Innenrand in das Durchgangsloch hineinragenden Kragen umschließt, wobei der von der Dichtungsscheibe abgedeckte Bereich des Flansches mit Vorsprüngen versehen ist und der Außenrand des Bundes in eine zum Mutterstück hin gerichtete Dichtlippe übergeht.

Durch die Gestaltung der Dichtungsscheibe, die den Flansch überzieht und mit ihrem Bund auch den Außenrand des Flansches umfasst und die an ihrem Innenrand einen in das Durchgangsloch hineinragenden Kragen aufweist, ergibt sich eine sich über den gesamten Flansch erstreckende Abdichtung, die auch im Falle von Ungenauigkeiten der Dicke der Dichtungsscheibe ihre Dichtwirkung dadurch beibehält, dass der von dem Dichtungsmaterial abgedeckte Bereich des Flansches mit Vorsprüngen versehen ist, die sich zwar in das Dichtungsmaterial eindrücken, wenn an der Kunststoffinutter ein weiteres Bauelement angeschraubt wird, dabei aber Zonen aufrecht erhalten, in denen der endgültige Abstand von Flansch und Bauteil und gegebenenfalls Flansch und einem weiteren Bauelement durch die Höhe der Vorsprünge bestimmt wird. Damit lässt sich die erzielbare Dichtwirkung sehr genau definieren.

Die Wirksamkeit der Abdichtung im Bereich des Bundes kann man dadurch erhöhen, dass der Bund auf seiner inneren Seite derart abgeschrägt ist, dass seine Stärke in Richtung vom Flansch weg abnimmt. Weiterhin lässt sich der Außenrand des Flansches entsprechend der Schräge der Dichtungsscheibe ebenfalls abschrägen. In diesem Falle drückt der schräge Außenrand des Flansches zusätzlich den Bund der Dichtungsscheibe beim Anziehen der Schrauben nach außen, womit sich der abgeschrägte Bund mit entsprechend größerer Fläche an das Bauteil anlegt.

Auch im inneren Bereich der Dichtungsscheibe lässt sich deren Dichtwirkung verbessern, nämlich dadurch, dass die Dichtungsscheibe von ihrer dem Flansch abgewandten Seite in einen in dem Durchbruch hineinragenden Ring übergeht. Dieser Ring drückt sich von innen her gegen den Rand des Durchbruchs und bewirkt an dieser Stelle eine eigene Abdichtung.

Die Wirkung des Kragens lässt sich dadurch erhöhen, dass dieser mit einer Verlängerung den Flansch überragt. Wenn dann die Schraube angezogen wird, so sorgt die Verlängerung dafür, dass von dessen Material die Schraube besonders eng und unter Druck umfasst wird.

Häufig ist es erforderlich, die mit der Dichtungsscheibe versehene Kunststoffmutter durch Anziehen der in das Mutterstück eingedrehten Schraube in Bezug auf das Bauteil fest zur Anlage zu bringen, wobei auf plattenartige Bauteile Rücksicht zu nehmen ist, die z.B. aus Toleranzgründen unterschiedliche Dicke aufweisen. Dies geschieht dadurch, dass die Dichtungsscheibe außer der Schraube auch einen den Flansch und das Mutterstück einstückig verbindenden, zusammenstauchbaren Abstandshalter umfasst. Der Abstandshalter, dessen Höhe die Dicke der Dichtungsscheibe berücksichtigt, bewirkt beim Anziehen der Schraube aufgrund der Verringerung seiner Länge eine feste Anlage des Flansches an der einen Seite des Bauteils und der Schnapphaken an der anderen Seite des Bauteils, womit die Kunststoffmutter unter Berücksichtigung der Dicke der Dichtungsscheibe in Bezug auf das Bauteil eine definierte wackelfreie Lage erhält.

Das Aufnahmeloch für die Schraube kann man als Sackloch ausbilden, womit sich in diesem Bereich mittels des Sackloches eine zusätzliche Abdichtung ergibt.

Die vorstehend beschriebene Kunststoffmutter eignet sich hervorragend dafür, durch Spritzgießen hergestellt zu werden, wodurch sich ein einstückiges Bauelement ergibt, bei dessen Herstellung auch die Dichtungsscheibe mit an den Flansch angespritzt werden kann. Für das Material der Dichtungsscheibe kann man bei diesem Herstellungsvorgang eine elastische Materialkomposition wählen, die wesentlich weicher ist als das Material der eigentlichen Kunststoffinutter. Die Kunststoffinutter mit ihrer derart angespritzten Dichtungsscheibe eignet sich daher hervorragend für eine Fertigung in großen Mengen.

In den Figuren sind Ausführungsbeispiele der Erfindung dargestellt. Es zeigen:
- Figur 1: die erfindungsgemäße Kunststoffmutter angebracht an einem Bauteil;
- Figur 2: eine vereinfachte Kunststoffmutter mit besonderen in den Ansprüchen angegebenen Merkmalen;
- Figur 3: die vereinfachte Kunststoffmutter gemäß Figur 2, mit der ein weiteres Bauelement an dem die Kunststoffmutter tragenden Bauteil verbunden ist;
- Figur 4: eine vereinfachte Kunststoffmutter mit Abstandhaltern zwischen Flansch und Mutterstück.

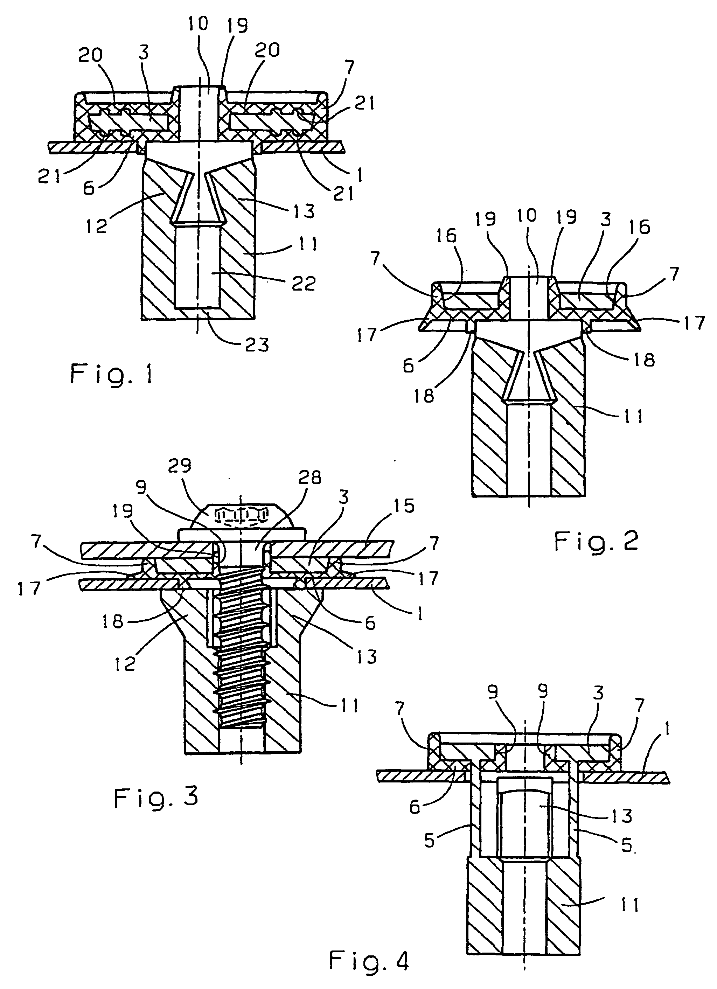

In der Figur 1 ist die Kunststoffmutter im Schnitt dargestellt, die in das Bauteil 1 eingesetzt ist, das dafür einen Durchbruch aufweist. In diesem Durchbruch ragt der Ring 18 hinein, wie er deutlich in Figur 2 dargestellt ist. Die Kunststoffmutter liegt mit ihrem Flansch 3 an der Oberseite des Bauteils 1 an. Der Flansch 3 ist über die aus der Figur 4 ersichtlichen Abstandhalter 5 mit dem Mutterstück 11 verbunden. Der Flansch 3 ist mit der Dichtungsscheibe 6 versehen, die den Bereich zwischen dem Flansch 3 und der Oberseite des Bauteils 1 ausfüllt. Die Dichtungsscheibe 6 weist an ihrem Außenrand den Bund 7 auf, der so hoch ausgebildet ist, dass er über den Flansch 3 hinausragt. Die Dichtungsscheibe 6 bildet über den Flansch 3 einen vollständigen Überzug, der sich als Abdeckung 20 über den Flansch 3 erstreckt. Hierdurch wird erreicht, dass der Flansch 3 von allen Seiten her abgedichtet ist. Der Flansch 3 selbst ist hier mit Vorsprüngen 21 versehen, und zwar an seiner Oberseite und seiner Unterseite, die sich teilweise in das Material der Dichtungsscheibe 6 und der Abdeckung 20, also in den Überzug hinein erstrecken. Aufgrund der Anordnung der Vorsprünge 21 ergibt sich an diesen beim Anziehen einer Schraube und dem Andrücken eines weiteren Bauelements (siehe Figur 3) eine hohe Flächenpressung und ein Wegdrücken des Materials der Dichtungsscheibe 6 über den Vorsprüngen 21, von dem dann nur noch pro Vorsprung 21 jeweils ein dünner Film stehen bleibt, was aber für eine weiterhin bestehende Abdichtung ausreicht. Bei diesem Vorgang legt sich die dem Bauteil 1 zugewandte Seite des Flansches 3 mit ihren Vorsprüngen 21, abgesehen von dem verbleibenden Film, an diese Seite des Bauteils 1 an, was entsprechend auch auf der dem Bauteil 1 abgewandten Seite des Flansches 3 durch das Herandrücken eines weiteren Bauelementes erfolgt, so dass schließlich, gegeben durch die Dicke des Flansches 3 und die Höhe der Vorsprünge 21 das weitere Bauelement bei angezogener Schraube in einem definierten Abstand von dem Bauteil 1 gehalten wird. Das Mutterstück 11 ist bei dem Ausfiihrungsbeispiel gemäß Figur 1 hinsichtlich seines Gewindelochs 22 durch den Boden 23 abgeschlossen, womit also das Gewindeloch 22 bei der Ausführungsform gemäß Figur 5 als Sackloch ausgebildet ist.

Das Mutterstück 11 ist in bekannter Weise mit den beiden Schnapphaken 12 und 13 versehen, die bei Einführen einer Schraube in die Kunststoffmutter (siehe Figur 3) auseinander gespreizt werden und sich dabei hinter das Bauteil setzen und mit der Unterseite des Bauteils 1 in Berührung kommen. Auf diese Weise wird die Kunststoffmutter mittels der Schnapphaken 12 und 13 und dem Flansch 3 an dem Bauteil 1 festgehalten.

Die in der Figur 1 dargestellte Kunststoffmutter enthält hinsichtlich der Gestaltung der Dichtungsscheibe 6 eine weitere Besonderheit, die darin besteht, dass der Kragen 9 mit der Verlängerung 19 den Flansch 3 überragt. Die Verlängerung 19 ist radial nach außen hin abgeschrägt, was bei Anziehen einer Schraube und Andrücken eines weiteren Bauelements (siehe Figur 3) dazu führt, dass die Verlängerung 19 nach innen in Richtung Schraube weggedrückt wird und sich damit besonders eng um die Schraube herum an diese anlegt. Dabei besitzt die Verlängerung 19 nicht die Tendenz, auch in radialer Richtung nach außen weg zu kippen, was aus den vorstehend dargelegten Gründen nicht wünschenswert wäre, da in diesem Falle Material der Dichtungsscheibe sich zwischen das anzuschraubende Bauelement und die Außenfläche des Flansches legen würde.

In der Figur 2 ist eine vereinfachte Ausbildung der Kunststoffinutter dargestellt, bei der der Bund 7 im Bereich seiner Außenkante 16 auf seiner inneren Seite derart abgeschrägt ist, dass seine Stärke in Richtung vom Flansch 3 weg abnimmt. Der Bund 7 erhält dadurch die Tendenz, dass beim Anziehen einer Schraube und der Befestigung eines weiteren Bauelements (15 gemäß Figur 3) der Bund 7 sich praktisch nach außen neigt und sich dabei satt an das weitere Bauelement anlegt, ohne dass sich Material von den Bund 7 zwischen dieses Bauelement und die Außenfläche des Flansches 3 schieben kann. Diese Tendenz des Abknickens des Bundes 7 nach außen hin wird noch dadurch unterstützt, dass die Außenkante 16 des Flansches 3 entsprechend der Schräge des Bundes 7 ebenfalls abgeschrägt ist. Die Dichtungsscheibe 6 weist noch eine weitere Besonderheit auf, nämlich die Dichtlippe 17, in die der Außenrand des Bundes übergeht. Diese Dichtlippe 17 ist zum Mutterstück 11 hin gerichtet und liegt bei angezogener Schraube an dem Bauteil an und wird von diesem radial nach außen weggequetscht (siehe Figur 3), womit die Dichtwirkung der dem Bauteil 1 zugewandten Seite der Dichtungsscheibe 6 entsprechend intensiviert wird.

Eine weitere Besonderheit der Dichtungsscheibe 6 gemäß der Kunststoffmutter gemäß Figur 2 (Punkt 1) besteht darin, dass die Dichtungsscheibe 6 auf ihrer dem Flansch 3 abgewandten Seite den Ring 18 aufweist, der im Wesentlichen den axialen Verlauf in den in Figur 2 nicht eingezeichneten Durchbruch 2 in Bauteil 1 (siehe Figur 1) hinein ragt und hier für eine Abdichtung gegenüber dem Durchbruch 2 sorgt.

In der Figur 3 ist die Kunststoffinutter, die im Wesentlichen derjenigen gemäß Figur 2 entspricht, im Zusammenwirken mit einem Bauteil 1 und einem daran anzubringenden weiteren Bauelement 15 dargestellt, wozu die Schraube 28 in das Durchgangsloch 10 (siehe Figur 2) eingesetzt und festgezogen wird, wobei sich der Schraubenkopf 29 an das Bauelement 15 anlegt und dieses fest an das Bauteil 1 unter Zwischenlage des Flansches 3 anlegt. Die Schnapphaken 12 und 13 sind dabei ausgespreizt und liegen an der Unterseite 14 des Bauteils 1 an. Dabei wird die Dichtungsscheibe 6 stark zusammengepresst und ihr Bund 7 nach außen weggedrückt, der sich damit satt an die dem Bund 7 zugewandte Seite des Bauelementes 15 anlegt und hier zusätzlich eine Abdichtung bewirkt. In entsprechender Weise hat sich auch die Dichtlippe 17 (siehe Figur 3) flach an das Bauteil 1 angelegt. Weiter ragt in den Durchbruch (siehe Figur 1) des Bauteils 1 der Ring 18 hinein und dichtet zusätzlich diesen ab. Schließlich bewirkt der Kragen 9 mit seiner Verlängerung 19 eine Umfassung des gewindefreien Halses der Schraube 28, um den der Kragen 9 sowie die Verlängerung 19 gequetscht werden und damit auch die Schraube 28 in Bezug auf den von dem Mutterstück 11 eingenommenen Raum abdichtet. Insgesamt liegt damit eine besonders wirkungsvolle Abdichtung von dem den Schraubenkopf 29 aufnehmenden Bereich und dem das Mutterstück 11 annehmenden Bereich vor, was auch für den Fall gilt, dass irgendwelche Abzugskräfte auf das Bauelement 15 in Bezug auf das Bauteil 1 einwirken. Wenn dabei die Tendenz entsteht, dass sich zusammen mit dem Bauelement 15 der Flansch 3 vom Bauteil 1 geringfügig entfernt, dann wird diese Abstandsvergrößerung zwischen Flansch 3 und Bauteil 1, der gemäß Figur 3 durch die zusammengedrückte Dichtungsscheibe 6 definiert ist, etwas gelockert, was aber insbesondere durch den dabei elastisch folgenden Bund 7 und die Dichtlippe 17 ausgeglichen werden kann. An den Dichtungsverhältnissen ändert sich dabei im Bereich um den gewindefreien Hals der Schraube 28 nichts, so dass die hier durch den Kragen 9 und die Verlängerung 19 bewirkte Abdichtung von dem vorstehend geschilderten Vorgang unbeeinflusst bleibt. Insgesamt liegt damit auch bei besonderen, auf das Bauelement 15 einwirkende Belastungen eine besonders sichere Abdichtung vor.

Aus Figur 4 ist die Dichtungsscheibe 6 mit ihrem Bund 7 und ihrem Kragen 9 ersichtlich, wobei auch gezeigt ist, dass die Dichtungsscheibe 6 den Flansch 3 und die Abstandshalter 5 umfasst. Im Bereich der Dichtungsscheibe 6 neben dem Bund 7 verbleibt der geschlossene Bereich zwischen den Abstandshaltern 5 und dem Bund 7, so dass also über diesen Bereich eine sichere Abdichtung zwischen Flansch 3 und Bauteil 1 gewährleistet ist.

Es sei noch darauf hingewiesen, dass alle die im Zusammenhang mit den Figuren 2 bis 4 dargestellten Besonderheiten gegenüber der Ausführungsform nach Figur 1 für sich allein zusätzlich an der Ausführungsform gemäß Figur 1 anzubringen sind.

## Patentansprüche

1. Kunststoffmutter zur Anbringung an einem einen Durchbruch (2) aufweisenden Bauteil (1), die mit einem zur Aufnahme einer Schraube (28) dienenden Mutterstück (11) in den Durchbruch (2) einsteckbar ist und zur Anlage an der einen Seite (4) des Bauteils (1) mit einem ein Durchgangsloch (10) für die Schraube (28) aufweisenden Flansch (3), der auf seiner dem Bauteil (1) zugewandten Seite eine Dichtungsscheibe (6) aufweist, und zur Anlage an der anderen Seite (14) des Bauteils (1) mit Schnapphaken (12, 13) versehen ist, die nach erfolgtem Einführen beim Anziehen der Schraube (28) im Aufnahmeloch (22) der Kunststoffmutter ausspreizen und damit die Kunststoffmutter am Bauteil (1) sichern, **dadurch gekennzeichnet, dass** die Dichtungsscheibe (6) den Flansch (3) ganz als Überzug mit einem an ihrem Außenrand den Flansch (3) urnfassenden Bund (7) und von ihrem Innenrand in das Durchgangsloch (10) hineinragenden Kragen (9) umschließt, wobei der von der Dichtungsscheibe (6) abgedeckte Bereich des Flansches (3) mit Vorsprüngen (21) versehen ist und der Außenrand des Bundes (7) in eine zum Mutterstück (11) hin gerichtete Dichtlippe (17) übergeht.

2. Kunststoffmutter nach Anspruch 1, **dadurch gekennzeichnet, dass** der Bund (7) auf seiner inneren Seite derart abgeschrägt ist, dass seine Stärke in Richtung vom Flansch (3) weg abnimmt.

3. Kunststoffmutter nach Anspruch 2, **dadurch gekennzeichnet, dass** die Außenkante (16) des Flansches (3) entsprechend der Schräge des Bundes (7) abgeschrägt ist.

4. Kunststoffmutter nach einem der Ansprüche 1 bis 3, **dadurch gekennzeichnet, dass** die Dichtungsscheibe (6) von ihrer dem Flansch (3) abgewandten Seite in einen in den Durchbruch (2) hineinragenden Ring (18) übergeht.

5. Kunststoffmutter nach einem der Ansprüche 1 bis 6, **dadurch gekennzeichnet, dass** der Kragen (9) mit einer Verlängerung (19) den Flansch (3) überragt.

6. Kunststoffmutter nach einem der Ansprüche 1 bis 5, **dadurch gekennzeichnet, dass** die Dichtungsscheibe (6) einen den Flansch (3) und das Mutterstück (11) einstückig verbindenden, zusammenstauchbaren Abstandshalter (5) umfasst.

7. Kunststoffmutter nach einem der Ansprüche 1 bis 6, **dadurch gekennzeichnet, dass** das Aufnahmeloch (22) für die Schraube (28) als Sackloch ausgebildet ist.

8. Kunststoffmutter nach Anspruch 1 bis 7, **gekennzeichnet durch** einstückige Ausbildung **durch** Spritzformen mit an den Flansch (3) angespritzter Dichtungsscheibe (6).

## Claims

1. Plastic nut to be fitted to a component (1) having an opening (2), wherein the plastic nut can be inserted into the opening (2) by means of a nut part (11) serving to receive a bolt (28) and is provided in order to bear against one side (4) of the component (1) with a flange (3) having a through hole (10) for the bolt (28) and provided on its side directed towards the component (1) with a washer (6) and in order to bear against the other side (14) of the component (1) with snap hooks (12, 13) which, following the insertion of the bolt (28), expand when the bolt is tightened in the insertion hole (22) in the plastic nut and therefore secure the plastic nut to the component (1), **characterised in that** the washer (6) surrounds the flange (3) completely as a covering by means of a shoulder (7) embracing the flange (3) at its outer edge and a collar (9) projecting from its inner edge into the through hole (10), the region of the flange (3) covered by the washer (6) being provided with projections (21) and the outer edge of the shoulder (7) merging into a sealing lip (17) directed towards the nut part (11).

2. Plastic nut according to claim 1, **characterised in that** the shoulder (7) is bevelled on its inside in such a manner that its thickness decreases in the direction away from the flange (3).

3. Plastic nut according to claim 2, **characterised in that** the outer edge (16) of the flange (3) is bevelled in accordance with the bevel of the shoulder (7).

4. Plastic nut according to one of claims 1 to 3, **characterised in that** the washer (6) merges from its side directed away from the flange (3) into a ring (18) projecting into the opening (2).

5. Plastic nut according to one of claims 1 to 6, **characterised in that** the collar (9) projects beyond the flange (3) by means of an extension (19).

6. Plastic nut according to one of claims 1 to 5, **characterised in that** the washer (6) includes a compressible spacer (5) connecting the flange (3) and the nut part (11) in one piece.

7. Plastic nut according to one of claims 1 to 6, **characterised in that** the insertion hole (22) for the bolt (28) is in the form of a blind hole.

8. Plastic nut according to claims 1 to 7, **characterised by** a one-piece design by injection moulding with a washer (6) injection moulded on to the flange (3).

## Revendications

1. Écrou en matière plastique à monter sur une pièce structurelle (1) pourvue d'un passage (2), lequel écrou est insérable dans le passage (2) par l'intermédiaire d'une partie d'écrou (11) servant à recevoir une vis (28) et est muni, pour son application contre un côté (4) de la pièce structurelle (1), d'une bride (3) pourvue d'un trou débouchant (10) pour la vis (28) et, sur son côté tourné vers la pièce structurelle (1), d'une rondelle d'étanchéité (6) et, pour son application contre l'autre côté (14) de la pièce structurelle (1), de griffes de verrouillage (12, 13) qui, une fois l'insertion terminée, se déploient lors du serrage de la vis (28) dans le trou récepteur (22) de l'écrou en matière plastique et bloquent ainsi l'écrou en matière plastique contre la pièce structurelle (1), **caractérisé en ce que** la rondelle d'étanchéité (6) entoure complètement la bride (3) à la façon d'un enrobage avec un collet (7) enserrant la bride (3) au niveau de son bord extérieur et avec un rebord (9) pénétrant, à partir du bord intérieur de celle-ci, dans le trou débouchant (10), la zone de la bride (3) recouverte par la rondelle d'étanchéité (6) étant munie de saillies (21) et le bord extérieur du collet (7) se prolongeant par une lèvre d'étanchéité (17) dirigée vers la partie d'écrou (11).

2. Écrou en matière plastique selon la revendication 1, **caractérisé en ce que**, sur son côté intérieur, le collet (7) est biseauté, de sorte que son épaisseur diminue dans la direction opposée à la bride (3).

3. Écrou en matière plastique selon la revendication 2, **caractérisé en ce que** la rive extérieure (16) de la bride (3) est biseautée en fonction de l'épaisseur du collet (7).

4. Écrou en matière plastique selon une des revendications 1 à 3, **caractérisé en ce que** la rondelle d'étanchéité (6) se prolonge, à partir de son côté orienté à l'opposé de la bride (3), par un anneau (18) pénétrant dans un passage (2).

5. Écrou en matière plastique selon une des revendications 1 à 6, **caractérisé en ce que** le rebord (9) dépasse de la bride (3) par un prolongement (19).

6. Écrou en matière plastique selon une des revendications 1 à 5, **caractérisé en ce que** la rondelle d'étanchéité (6) comprend un moyen d'écartement écrasable (5) reliant d'un seul tenant la bride (3) et la partie d'écrou (11).

7. Écrou en matière plastique selon une des revendications 1 à 6, **caractérisé en ce que** le trou récepteur (22) pour la vis (28) est conformé en trou borgne.

8. Écrou en matière plastique selon les revendications 1 à 7, **caractérisé par** une conception d'un seul tenant par moulage par injection avec la rondelle d'étanchéité (6) surmoulée sur la bride (3).
